# EUROPEAN PATENT APPLICATION

(11) **EP 4 730 196 A1**
(43) Date of publication of application: **22.04.2026**
(21) Application number: 24823772.9
(22) Date of filing: 17.06.2024
(51) Int. Cl.: G06K 19/077, B32B 15/01, B32B 37/12, C23C 30/00, C22C 38/40

(54) **SMART IC SUBSTRATE, SMART IC MODULE, AND IC CARD COMPRISING SAME**

(30) Priority: 16.06.2023 KR 20230077671
(71) Applicant: LG INNOTEK CO. LTD, Gangseo-gu Seoul 07796 (KR)
(72) Inventor: OH, Jung Hun, Seoul 07796 (KR); KIM, Seung Joon, Seoul 07796 (KR); LEE, Do Yun, Seoul 07796 (KR)
(74) Representative: DREISS Patentanwälte PartG mbB
(86) International application number: PCT/KR2024/008327
(87) International publication number: WO 2024/258256

(57) **Abstract**

A smart IC substrate according to an embodiment includes a substrate including a first surface and a second surface opposite the first surface; a bonding layer disposed on the first surface; a buffer layer disposed on the bonding layer; a metal layer disposed on the buffer layer; and a plating layer disposed on a lower surface of the metal layer, wherein the metal layer includes an alloy including nickel (Ni), iron (Fe), and chromium (Cr), wherein the buffer layer includes a first buffer layer a second buffer layer, wherein the first buffer layer is disposed between the second buffer layer and the metal layer, wherein the second buffer layer comprises a second-first buffer layer and a second-second buffer layer, wherein the second-first buffer layer is disposed between the first buffer layer and the second-second buffer layer, and wherein a surface roughness of the second-second buffer layer is greater than a surface roughness of the second-first buffer layer.

## Description

### [Technical Field]

An embodiment relates to a smart IC substrate, a smart IC module, and an IC card including the same.

### [Background Art]

An IC card is a plastic card with an integrated circuit chip capable of storing and processing information. The IC card is equipped with an IC that stores necessary information and transmits the information to a reader in a form of an electrical signal.

The IC card is manufactured by inserting a smart IC module into a card body.

The smart IC module is classified as a single type or a dual type depending on the arrangement of the metal layers. The single type has a metal layer and a plating layer disposed on only one surface of the substrate. The dual type has the metal layer and plating layer disposed on both surfaces of the substrate.

In addition, the above smart IC modules are classified into contact, contactless, hybrid, and combi cards depending on how the card is used. The contact card transmits and receives information through physical contact. The contactless card transmits and receives information without physical contact. In addition, hybrid cards and combination cards include both contact and contactless functions.

Accordingly, the smart IC module includes a contact surface and a bonding surface. The contact surface contacts an external device, and a chip is disposed on the bonding surface. The bonding surface is inserted into the card body.

The chip disposed on the bonding surface and a conductive pattern disposed on the contact surface are electrically connected by wire bonding. Accordingly, the smart IC module includes a plurality of holes. The chip and the conductive pattern are wire bonded through the holes.

A metal layer is disposed on the contact surface. If the metal layer is exposed to the outside, the metal layer may corrode. Furthermore, the metal layer may be damaged by external impact. Therefore, a plating layer may be disposed on the metal layer on the contact surface.

A manufacturing process of the smart IC module may be increased by the plating layer. In addition, the plating layer requires an expensive material such as gold (Au). Accordingly, the process cost may be increased.

Therefore, a new structure of a smart IC substrate, a smart IC module, and an IC card including the same that can solve the above problems is required.

A prior art related to the smart IC substrate is disclosed in Korean Patent Publication No. KR10-2022-0110247.

### [Disclosure]

### [Technical Problem]

An embodiment provides a smart IC substrate with improved electrical characteristics and reliability.

### [Technical Solution]

A smart IC substrate according to an embodiment includes a substrate including a first surface and a second surface opposite the first surface; a bonding layer disposed on the first surface; a buffer layer disposed on the bonding layer; a metal layer disposed on the buffer layer; and a plating layer disposed on a lower surface of the metal layer, wherein the metal layer includes an alloy including nickel (Ni), iron (Fe), and chromium (Cr), wherein the buffer layer includes a first buffer layer a second buffer layer, wherein the first buffer layer is disposed between the second buffer layer and the metal layer, wherein the second buffer layer comprises a second-first buffer layer and a second-second buffer layer, wherein the second-first buffer layer is disposed between the first buffer layer and the second-second buffer layer, and wherein a surface roughness of the second-second buffer layer is greater than a surface roughness of the second-first buffer layer.

### [Advantageous Effects]

A smart IC substrate according to an embodiment includes a metal layer forming a circuit pattern. The metal layer includes an alloy. Specifically, the metal layer includes an alloy containing iron, nickel, and chromium in predetermined ratios. Accordingly, the metal layer has enhanced corrosion resistance, oxidation resistance, wear resistance, and hardness.

Therefore, even when the metal layer is exposed to the outside, corrosion can be prevented. Furthermore, even when the metal layer is exposed to the outside, damage to the metal layer due to external impact can be prevented.

Therefore, a separate plating layer disposed on a second surface (contact surface) of the metal layer can be omitted. Accordingly, a thickness of the smart IC substrate is reduced. Furthermore, the process efficiency of the smart IC substrate is improved.

Furthermore, the smart IC substrate according to the first embodiment includes a buffer layer. The buffer layer is disposed between the metal layer and the bonding layer. The buffer layer includes a first buffer layer and a second buffer layer. The buffer layer has a surface roughness within a predetermined range due to the second buffer layer.

The metal layer includes the alloy, and the alloy is formed by a rolling process. Accordingly, the surface roughness of the metal layer can be reduced. Accordingly, the buffer layer, having a surface roughness of a predetermined size, is disposed between the metal layer and the bonding layer. Accordingly, the adhesive force between the metal layer and the bonding layer is improved. Consequently, the reliability of the smart IC substrate is improved.

Furthermore, a smart IC substrate according to the first embodiment includes a metal layer. The metal layer defines a first region and a second region. The first region does not overlap the hole, and the second region overlaps the hole. The buffer layer is not disposed on the second region. The second region is not a region where the metal layer and the buffer layer are bonded. Therefore, even if the buffer layer is not disposed on the second region, the adhesion between the metal layer and the buffer layer is maintained.

Furthermore, the plating layer can be in direct contact with the metal layer. Accordingly, a signal transmitted from the chip can be easily transmitted to the metal layer. Accordingly, the electrical characteristics of the smart IC substrate can be improved.

### [Description of Drawings]

FIG. 1 is a top view of the first surface of a smart IC substrate according to a first embodiment.
FIG. 2 is a top view of the second surface of the smart IC substrate according to the first embodiment.
FIG. 3 is a cross-sectional view taken along the A-A' region of FIG. 2.
FIG. 4 is an enlarged view of the A region of FIG. 3.
FIG. 5 is an enlarged view of the B region of FIG. 3.
FIG. 6 is another cross-sectional view taken along the A-A' region of FIG. 2.
FIG. 7 is an enlarged view of the C region of FIG. 6.
FIG. 8 is another enlarged view of the C region of FIG. 6.
FIG. 9 is another cross-sectional view taken along the A-A' region of FIG. 2.
FIG. 10 is an enlarged view of the D region of FIG. 9.
FIG. 11 is another cross-sectional view taken along the A-A' region of FIG. 2.
FIG. 12 is an enlarged view of the E region of FIG. 11.
FIG. 13 is another cross-sectional view taken along the A-A' region of FIG. 2.
FIG. 14 is an enlarged view of the F region of FIG. 13.
FIG. 15 is another cross-sectional view taken along the A-A' region of FIG. 2.
FIG. 16 is an enlarged view of the G region of FIG. 15.
FIG. 17 is a top view of the second surface of a smart IC module according to an embodiment.
FIG. 18 is a cross-sectional view taken along the B-B' region of FIG. 17.
FIG. 19 is an exploded perspective view of a smart IC card according to an embodiment.
FIG. 20 is a diagram for explaining the combination of a smart IC module according to an embodiment.

### [Modes of the Invention]

Hereinafter, embodiments of the present disclosure will be described in detail with reference to the accompanying drawings. However, the spirit and scope of the present disclosure is not limited to a part of the embodiments described, and may be implemented in various other forms, and within the spirit and scope of the present disclosure, one or more of the elements of the embodiments may be selectively combined and redisposed.

In addition, unless expressly otherwise defined and described, the terms used in the embodiments of the present disclosure (including technical and scientific terms) may be construed the same meaning as commonly understood by one of ordinary skill in the art to which the present disclosure belongs, and the terms such as those defined in commonly used dictionaries may be interpreted as having a meaning that is consistent with their meaning in the context of the relevant art.

In addition, the terms used in the embodiments of the present disclosure are for describing the embodiments and are not intended to limit the present disclosure. In this specification, the singular forms may also include the plural forms unless specifically stated in the phrase, and may include at least one of all combinations that may be combined in A, B, and C when described in "at least one (or more) of A (and), B, and C".

Further, in describing the elements of the embodiments of the present disclosure, the terms such as first, second, A, B, (a), and (b) may be used. These terms are only used to distinguish the elements from other elements, and the terms are not limited to the essence, order, or order of the elements.

In addition, when an element is described as being "connected", "coupled", or "contacted" to another element, it may include not only when the element is directly "connected" to, "coupled" to, or "contacted" to other elements, but also when the element is "connected", "coupled", or "contacted" by another element between the element and other elements.

In addition, when described as being formed or disposed "on (over)" or "under (below)" of each element, the "on (over)" or "under (below)" may include not only when two elements are directly connected to each other, but also when one or more other elements are formed or disposed between two elements.

Further, when expressed as "on (over)" or "under (below)", it may include not only the upper direction but also the lower direction based on one element.

Hereinafter, a smart IC substrate, a smart IC module, and a smart IC card including the same according to an embodiment will be described with reference to the drawings.

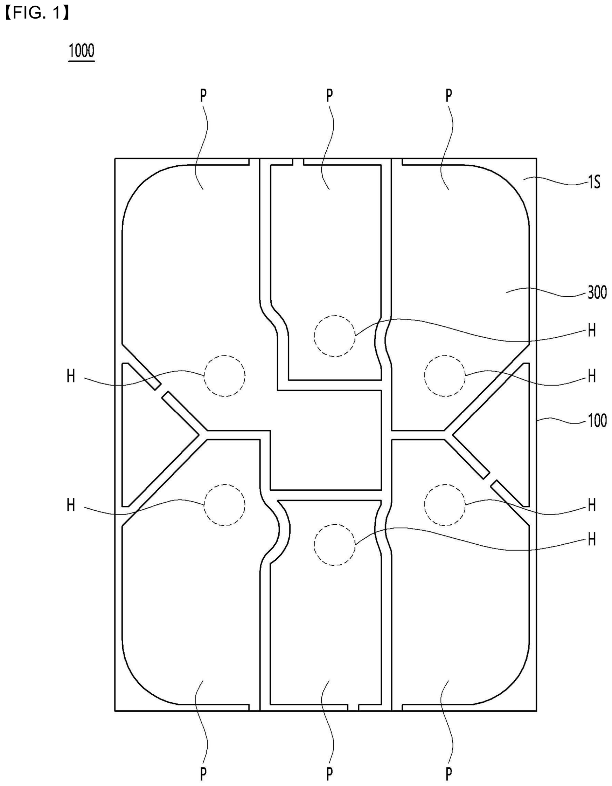

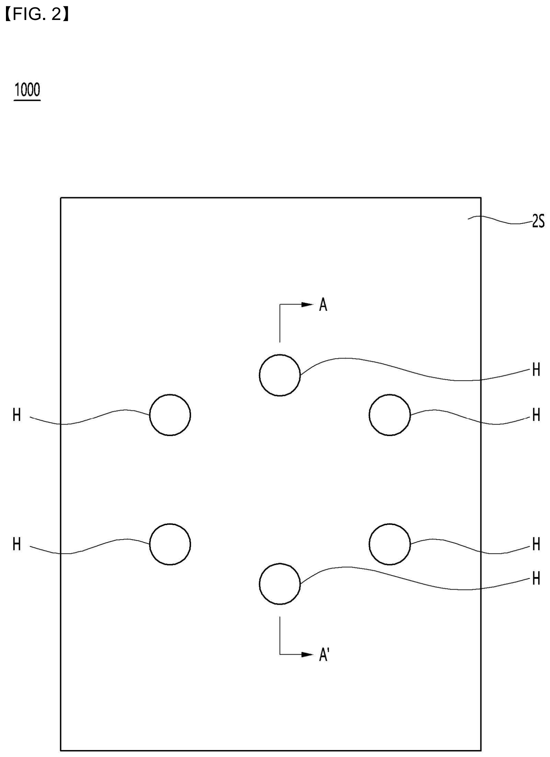

A smart IC substrate 1000 according to a first embodiment will be described with reference to FIGS. 1 to 5.

Referring to FIGS. 1 to 5, a smart IC substrate according to a first embodiment includes a substrate 100, a bonding layer 200, a metal layer 300, a buffer layer 400 and a plating layer 500.

The substrate 100 includes a first surface 1S and a second surface 2S. The first surface 1S and the second surface 2S are opposite surfaces.

The first surface 1S is defined as a contact surface. Specifically, the first surface 1S is a surface capable of recognizing information of the smart IC module through direct or indirect contact. In addition, the second surface 2S is defined as a bonding surface. In detail, the second surface 2S is a surface on which the chip is mounted. The second surface 2S is the surface that is bonded to a main body of a IC card.

The substrate 100 includes a resin material. The substrate 100 may include a prepreg containing glass fibers. Specifically, the substrate 100 may include a material in which glass fibers and a silicon-based filler (Si filler) are dispersed within an epoxy resin.

Alternatively, the substrate 100 may be rigid or flexible. For example, the substrate 100 may include glass or plastic. Specifically, the substrate 100 may include chemically strengthened/semi-strengthened glass, such as soda lime glass or aluminosilicate glass. Alternatively, the substrate 100 may include polyimide (PI), polyethylene terephthalate (PET), propylene glycol (PPG), polycarbonate (PC), or sapphire.

Alternatively, the substrate 100 may include an optically isotropic film. For example, the substrate 100 may include cyclic olefin copolymer (COC), cyclic olefin polymer (COP), optically isotropic polycarbonate (PC), or optically isotropic polymethyl methacrylate (PMMA).

Alternatively, the substrate 100 may be bent while having a partially curved surface. That is, the substrate 100 may be bent while having a partially flat surface and a partially curved surface. Specifically, an end of the substrate 100 may be bent while having a curved surface. Alternatively, the substrate 100 may be bent while having a random curvature.

The substrate 100 may have a thickness within a set range. For example, the thickness of the substrate 100 may be 80 µm to 150 µm, 90 µm to 140 µm, or 100 µm to 120 µm. If the thickness of the substrate 100 is less than 80 µm, a supporting force of the substrate 100 decreases. In addition, if the thickness of the substrate 100 exceeds 150 µm, the thickness of the smart IC substrate 1000 may increase. As a result, the size of the smart IC card is increased.

The substrate 100 has insulating properties. Therefore, the substrate 100 prevents short circuits between circuits. In addition, the substrate 100 serves to support the circuit during a process of forming the circuit.

The substrate 100 includes a hole. Specifically, the substrate 100 includes a plurality of holes H.

At least one of the holes is a region for wire bonding. The plating layer 500 is disposed in a region corresponding to the hole. For example, all of the holes are regions for wire bonding. Alternatively, some of the holes are regions for wire bonding, while others are regions for non-wire bonding. The chip C and the plating layer are wire bonded through the hole H.

The hole H has a width within a set range. The width of the hole H may be defined as a diameter of the hole or a minimum distance between inner surfaces of the hole. For example, the width of the hole H may be 500 µm to 1,000 µm, 600 µm to 900 µm, or 700 µm to 800 µm. If the width of the hole H is less than 500 µm, wire bonding through the hole H becomes difficult. In addition, if the width of the hole H exceeds 1000 µm, the support strength of the substrate 100 decreases.

The bonding layer 200 is disposed on the substrate 100. Specifically, a bonding layer 200 is disposed on the first surface 1S.

The bonding layer 200 includes a resin material. For example, the bonding layer 200 may include at least one of epoxy resin, acrylic resin, and polyimide resin. In addition, the bonding layer 200 may include at least one additive selected from a group consisting of natural rubber, a plasticizer, a curing agent, and a phosphorus-based flame retardant. This enhances the flexibility of the bonding layer 200.

A bonding layer 200 may have a thickness within a set range. For example, the thickness of the bonding layer 200 may range from 15 µm to 35 µm, 20 µm to 30 µm, or 22 µm to 28 µm. If the thickness of the bonding layer 200 is less than 15 µm, the adhesive strength of the bonding layer 200 decreases. This may cause the metal layer to peel off on the bonding layer 200. In addition, if the thickness of the bonding layer 200 exceeds 35 µm, the thickness of the smart IC substrate 1000 may increase. As a result, the size of the smart IC card increases.

The smart IC substrate 1000 includes a plurality of conductive patterns P. The conductive patterns P are disposed on the first surface 1S. The conductive patterns P are disposed on the bonding layer 200. The conductive patterns P are disposed on the contact surface. The conductive patterns P are circuit patterns of the smart IC substrate 1000.

The conductive patterns P are disposed spaced apart from each other. The hole H is disposed in a region corresponding to each conductive pattern P.

The conductive pattern P is formed by the metal layer 300.

A metal layer 300 is disposed on the substrate 100. The metal layer 300 is disposed on the bonding layer 200. The metal layer 300 includes a metal material. In detail, the metal layer 300 may include an alloy. More specifically, the metal layer 300 may include a binary alloy or a ternary alloy.

The metal layer 300 may have a thickness within a set range. For example, the thickness of the metal layer 300 may be 30 µm to 75 µm, 40 µm to 65 µm, or 50 µm to 60 µm. If the thickness of the metal layer 300 is less than 30 µm, the resistance of the metal layer 300 increases. In addition, if the thickness of the metal layer 300 exceeds 75 µm, the thickness of the smart IC substrate 1000 may increase. As a result, a size of the smart IC card is increased. In addition, process efficiency may decrease.

The buffer layer 400 is disposed on the substrate 100. The buffer layer 400 is disposed on the bonding layer 200. The buffer layer 400 is disposed under the metal layer 300. The buffer layer 400 is disposed between the bonding layer 200 and the metal layer 300.

The buffer layer 400 may include a first buffer layer 410 and a second buffer layer 420. The second buffer layer 420 is disposed on the bonding layer 200, and the first buffer layer 410 is disposed on the second buffer layer 420. That is, the first buffer layer 410 is disposed between the second buffer layer 420 and the metal layer 300.

The buffer layer 400 can improve the adhesion between the bonding layer 200 and the metal layer 300.

As previously described, the metal layer 300 may include an alloy.

The metal layer 300 may include an alloy containing nickel (Ni), iron (Fe), and chromium (Cr).

For example, the metal layer 300 may include a Monel-based alloy or an Inconel-based alloy. Specifically, the metal layer 300 may include a nickel (Ni)-chromium (Cr)-iron (Fe) first alloy containing nickel as a main component, chromium, and iron. The term "main component" in the alloy refers to a metal having a highest weight percent among a plurality of metals constituting the alloy.

For example, the first alloy may include nickel in an amount ranging from 60 wt% to 80 wt%, from 65 wt% to 78 wt%, or from 70 wt% to 75 wt%. Since the first alloy includes nickel in the above-mentioned wt% range, the corrosion resistance, oxidation resistance, wear resistance, and hardness of the metal layer 300 may be improved.

Furthermore, the first alloy may include chromium in an amount ranging from 10 wt% to 22 wt%, from 11 wt% to 21 wt%, or from 12 wt% to 18 wt%. Since the first alloy includes chromium in the above-mentioned wt% range, the nickel elution amount of the metal layer may be reduced.

Furthermore, the first alloy may include iron in an amount ranging from 3 wt% to 20 wt%, from 5 wt% to 15 wt%, or from 7 wt% to 11 wt%. Since the first alloy contains iron within the above weight percent range, the rollability (or ductility) of the metal layer can be increased. Accordingly, a thickness of the metal layer can be reduced. Furthermore, a surface roughness of the metal layer can be made uniform.

Alternatively, the metal layer 300 may include a SUS-based alloy. Specifically, the metal layer 300 may include an iron (Fe)-chromium (Cr)-nickel (Ni) second alloy containing iron as a main component and chromium and nickel.

For example, the second alloy may contain iron in an amount of 60 to 80 wt%, 61 to 78 wt%, or 63 to 75 wt%. Since the second alloy contains iron within the above weight percent range, the corrosion resistance, oxidation resistance, wear resistance, and hardness of the metal layer 300 can be improved. Additionally, the rollability (or ductility) of the metal layer can be increased.

Furthermore, the first alloy may include 10 wt% to 22 wt%, 13 wt% to 21 wt%, or 15 wt% to 10 wt% of chromium. Since the first alloy includes chromium within the above wt% range, the nickel elution amount of the metal layer can be reduced.

Furthermore, the first alloy may include 3 wt% to 20 wt%, 5 wt% to 18 wt%, or 7 wt% to 15 wt% of nickel. Since the first alloy includes nickel within the above wt% range, a surface roughness change rate of the metal layer can be reduced. Furthermore, an etching rate of the metal layer can be improved.

The metal layer 300 may include the first alloy or the second alloy.

Accordingly, the plating layer disposed on the metal layer 300 can be omitted. Specifically, the metal layer 300 includes a first surface 301 facing the buffer layer 400 and a second surface 302 opposite the first surface 301.

Conventionally, a separate plating layer was formed on the second surface 302. The plating layer prevented corrosion of the metal layer 300. It also enhanced the aesthetics of the contact surface exposed to the user.

The plating layer includes a plurality of metal layers. For example, the plating layer may include a gold (Au) layer formed on a nickel layer. Alternatively, the plating layer may include a palladium (Pd) layer formed on a nickel layer. Alternatively, the plating layer may include a silver (Ag) layer formed on a nickel layer.

A process of forming the plating layer has the problem of increasing the manufacturing process time and process costs of the smart IC substrate.

The smart IC substrate according to the first embodiment includes a metal layer comprising the first alloy or the second alloy. Accordingly, the plating layer formed on the second surface 302 can be omitted.

Specifically, since the metal layer includes the first alloy or the second alloy, the corrosion resistance of the metal layer is improved. Accordingly, even when the metal layer is directly exposed to the outside, corrosion of the metal layer can be prevented.

Furthermore, since the metal layer includes the first alloy or the second alloy, the nickel elution amount of the metal layer is reduced. Accordingly, even if the metal layer is directly exposed to the outside, it is possible to prevent the user from contacting nickel.

Therefore, the smart IC substrate according to the first embodiment has improved process efficiency. Furthermore, since a separate plating layer is omitted, the thickness of the smart IC substrate is reduced.

Meanwhile, the metal layer 300 including either the first alloy or the second alloy may have the following characteristics.

*82 Specifically, the metal layer 300 including either the first alloy or the second alloy may have a resistance of 0.07Ω to 0.35Ω. Additionally, the metal layer 300 comprising either the first alloy or the second alloy may have an etching rate (µm/min) of 30 µm/min to 70 µm/min. Furthermore, the metal layer 300 comprising either the first alloy or the second alloy may have a surface roughness change rate of 0.2% to 6.0%. Furthermore, the metal layer 300 comprising either the first alloy or the second alloy may have a wire bondability of 4 gf or greater. Furthermore, the metal layer 300 comprising either the first alloy or the second alloy may have a nickel elution rate of 0 to 0.28 µg/cm2/week. Furthermore, the metal layer 300 comprising either the first alloy or the second alloy may have a plating adhesion of 5B or greater.

Meanwhile, the first alloy or the second alloy is formed by a rolling process. Accordingly, the surface roughness of the metal layer 300 is reduced. Consequently, the adhesive strength between the metal layer 300 and the bonding layer is reduced.

To solve this problem, the smart IC substrate according to the first embodiment includes a buffer layer 400. The buffer layer 400 is disposed between the first surface 301 and the bonding layer 200.

The buffer layer 400 may include a first buffer layer 410 and a second buffer layer 420. The second buffer layer 420 is disposed on the bonding layer 200. The first buffer layer 410 is disposed on the second buffer layer 420. That is, the first buffer layer 410 is disposed between the second buffer layer 420 and the metal layer 300.

The first buffer layer 410 may include a metal. For example, the first buffer layer 410 may include nickel. The adhesion between the metal layer 300 and the second buffer layer 420 is improved by the first buffer layer 410.

The second buffer layer 420 may include a metal. For example, the second buffer layer 420 may include copper (Cu). The adhesion between the metal layer 300 and the bonding layer 200 is enhanced by the second buffer layer 420.

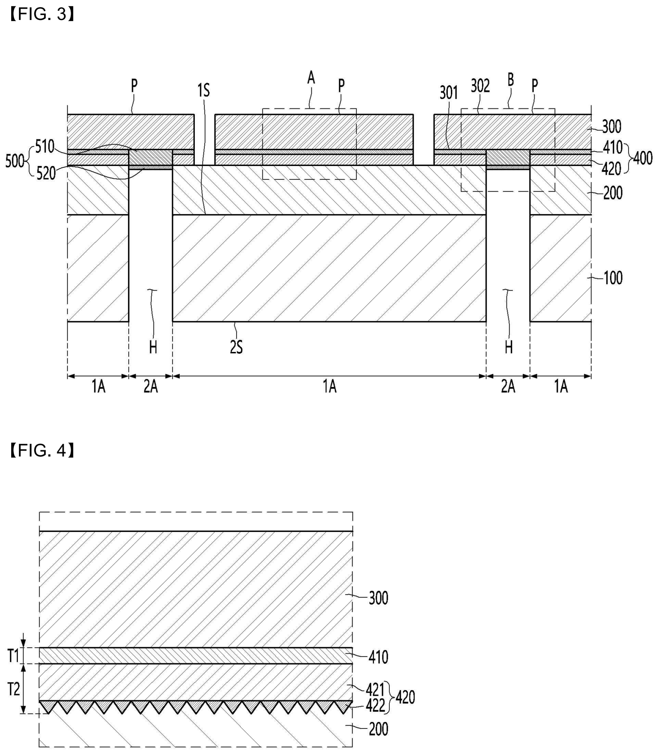

Referring to FIG. 4, the second buffer layer 420 may include a second-first buffer layer 421 and a second-second buffer layer 422. The second-first buffer layer 421 is disposed between the first buffer layer 410 and the second-second buffer layer 422.

The second-first buffer layer 421 and the second-second buffer layer 422 are formed integrally.

The second-first buffer layer 421 may include a metal. That is, the second-first buffer layer 421 is a metal layer. For example, the second-first buffer layer 421 may include copper. The second-second buffer layer 422 may include metal oxide. That is, the second-second buffer layer 422 is a metal oxide layer. For example, the second-second buffer layer 422 may include copper oxide.

The second-second buffer layer 422 may be formed by oxidizing a portion of the second buffer layer 420. A surface roughness of the second-second buffer layer 422 increases due to an oxidation process. That is, the surface roughness of the second-second buffer layer 422 facing the bonding layer 200 may be greater than the surface roughness of the second-first buffer layer 421.

In detail, the surface roughness of the second-second buffer layer 422 may be greater than the surface roughness of the metal layer 300. In addition, the surface roughness of the second-second buffer layer 422 may be greater than the surface roughness of the first buffer layer. In addition, the surface roughness of the second-second buffer layer 422 may be greater than the surface roughness of the plating layer. Specifically, the surface roughness of the second-second buffer layer 422 may be greater than the surface roughness of the first plating layer 510. In addition, the surface roughness of the second-second buffer layer 422 may be greater than the surface roughness of the second plating layer 520. In addition, the surface roughness of the second-second buffer layer 422 may be greater than the surface roughness of the substrate 100.

The surface roughness between the second-second buffer layer 422 and one surface of the bonding layer 200 may be greater than the surface roughness between the second-first buffer layer 421 and the second-second buffer layer 422. Additionally, the surface roughness between the second-second buffer layer 422 and one surface of the bonding layer 200 may be greater than the surface roughness between the first surface 1S of the substrate and the other surface of the bonding layer 200. Furthermore, the surface roughness between the second-second buffer layer 422 and one surface of the bonding layer 200 may be greater than the surface roughness between the metal layer 300 and the first buffer layer 420.

A thickness of the second-second buffer layer 422 may be less than a thickness of the second-first buffer layer 421. For example, a thickness of the second-second buffer layer 422 may be 20% or less, 10% or less, or 5% or less of a thickness of the second buffer layer.

The adhesive strength between the metal layer 300 and the bonding layer 200 may be enhanced by the buffer layer 400. Specifically, the buffer layer 400 includes the second-second buffer layer 422. The second-second buffer layer 422 faces the bonding layer 200. Accordingly, a bonding area between the buffer layer 400 and the bonding layer 200 is increased by the second-second buffer layer 422. Consequently, the adhesion between the metal layer 300 and the bonding layer 200 is improved. Consequently, the metal layer 300 can be easily formed. Furthermore, delamination of the metal layer 300 can be prevented. Accordingly, the process efficiency and reliability of the smart IC substrate can be improved.

The plating layer 500 is disposed below the metal layer 300. Specifically, the plating layer 500 is disposed on the first surface 301 of the metal layer. The plating layer 500 is disposed on a region overlapping the hole H.

The plating layer 500 is connected to a wire connected to the chip. That is, the chip and the plating layer are wire-bonded. Thus, the chip and the metal layer 300 are electrically connected to the chip.

The plating layer 500 may include a first plating layer 510 and a second plating layer 520. The first plating layer 510 is disposed below the first surface 301, and the second plating layer 520 is disposed below the first plating layer 510. That is, the first plating layer 510 is disposed between the metal layer 300 and the second plating layer 520.

The first plating layer 510 may include a metal. The first plating layer 510 may include a same material as the first buffer layer 410. For example, the first plating layer 510 may include nickel. The adhesion between the metal layer 300 and the second plating layer 520 may be improved by the first plating layer 510. That is, the first plating layer 510 may be a buffer layer.

The second plating layer 520 may include a metal. The second plating layer 520 may include at least one metal selected from the group consisting of gold, silver, and palladium. The plating layer 500 and the wire may be bonded by the second plating layer 520.

The buffer layer 400 may be partially removed.

In detail, the metal layer 300 may be divided into a plurality of regions. In detail, the metal layer 300 may include a first region 1A and a second region 2A. The first region 1A is a region that does not overlap the hole H. The second region 2A overlaps with the hole H.

The buffer layer 400 is disposed on the first region 1A. Furthermore, the buffer layer 400 is not disposed on the second region 2A. That is, the buffer layer 400 is not disposed within the hole H. Accordingly, the plating layer 500 can be in direct contact with the metal layer 300.

The buffer layer 400 is a layer for ensuring adhesion between the metal layer 300 and the bonding layer 200. The metal layer 300 is not adhered to the bonding layer 200 in a region overlapping the hole H. Therefore, even if the buffer layer 400 of the second region 2A is removed, the adhesion between the metal layer 300 and the bonding layer 200 can be maintained.

Additionally, since the buffer layer 400 of the second region 2A is removed, a distance between the plating layer 500 and the metal layer 300 can be shortened. Accordingly, signals transmitted from the chip can be easily transmitted to the metal layer 300.

Meanwhile, the first buffer layer 410, the second buffer layer 420, the first plating layer 510, and the second plating layer 520 may have set thicknesses.

A thickness T1 of the first buffer layer may be smaller than a thickness T2 of the second buffer layer. The thickness T1 of the first buffer layer may be smaller than a thickness T3 of the first plating layer. The thickness T1 of the first buffer layer may be greater than a thickness T4 of the second plating layer.

The thickness T2 of the second buffer layer may be equal to the thickness T3 of the first plating layer. Alternatively, the thickness T2 of the second buffer layer may be greater than the thickness T3 of the first plating layer. Alternatively, the thickness T2 of the second buffer layer may be less than the thickness T3 of the first plating layer.

The thickness T1 of the first buffer layer may be 1 µm or less. For example, the thickness T1 of the first buffer layer may be 0.6 µm to 1 µm, 0.7 µm to 1 µm, or 0.8 µm to 1 µm.

If the thickness T1 of the first buffer layer is less than 0.6 µm, the adhesive strength between the first buffer layer 410 and the second buffer layer 420 may be reduced. Consequently, the adhesive strength between the metal layer 300 and the buffer layer 400 may be reduced. Furthermore, if the thickness T1 of the first buffer layer exceeds 1 µm, the process efficiency of forming the buffer layer may be reduced. Additionally, a process time for removing the buffer layer of the second region 2A may increase.

The thickness T2 of the second buffer layer may be 3 µm to 8 µm, 3.5 µm to 7 µm, or 4 µm to 6 µm.

If the thickness T2 of the second buffer layer is less than 3 µm, the process of forming the second-second buffer layer 422 may be difficult. Consequently, the desired surface roughness may not be formed in the second buffer layer 420. Consequently, the adhesive strength between the metal layer 300 and the bonding layer 200 may be reduced. Furthermore, if the thickness T2 of the second buffer layer exceeds 8 µm, the process efficiency of forming the buffer layer may be reduced. Furthermore, the process time for removing the buffer layer in the second region 2A may increase.

The thickness T3 of the first plating layer may be 2 µm to 9 µm, 3 µm to 8 µm, or 4 µm to 7 µm.

*118 If the thickness T3 of the first plating layer is less than 2 µm, the adhesive strength between the first plating layer 510 and the second plating layer 520 may decrease. As a result, the adhesive strength between the metal layer 300 and the plating layer 500 may decrease. In addition, when wire-bonding the chip and the plating layer, the plating layer may be damaged by heat and pressure.

Furthermore, if the thickness T3 of the first plating layer exceeds 9 µm, the process efficiency of forming the plating layer may decrease.

The thickness T4 of the second plating layer may be 0.5 µm or less. Specifically, the thickness T4 of the second plating layer may be 0.1 µm to 0.5 µm, 0.15 µm to 0.4 µm, or 0.2 µm to 0.35 µm. If the thickness T4 of the second plating layer is less than 0.1 µm, the bonding strength between the wire and the second plating layer 520 may decrease. If the thickness T4 of the second plating layer exceeds 0.5 µm, process costs may increase and process efficiency may decrease.

A smart IC substrate according to the first embodiment includes a metal layer forming a circuit pattern. The metal layer includes an alloy. Specifically, the metal layer includes an alloy containing iron, nickel, and chromium in predetermined ratios. Accordingly, the metal layer has enhanced corrosion resistance, oxidation resistance, wear resistance, and hardness.

Therefore, even when the metal layer is exposed to the outside, corrosion of the metal layer can be prevented. Furthermore, even when the metal layer is exposed to the outside, damage to the metal layer due to external impact can be prevented.

Therefore, a separate plating layer disposed on the second surface (contact surface) of the metal layer can be omitted. As a result, the thickness of the smart IC substrate is reduced. Furthermore, the process efficiency of the smart IC substrate is improved.

In addition, the smart IC substrate according to the first embodiment includes a buffer layer. The buffer layer is disposed between a metal layer and a bonding layer. The buffer layer includes a first buffer layer and a second buffer layer. The buffer layer has a surface roughness within a set range due to the second buffer layer.

The metal layer includes the alloy, and the alloy is formed by a rolling process. Accordingly, the surface roughness of the metal layer can be reduced. Therefore, the buffer layer having a surface roughness within a set range is disposed between the metal layer and the bonding layer. Accordingly, the adhesion between the metal layer and the bonding layer is improved. Therefore, the reliability of the smart IC substrate is enhanced.

In addition, the smart IC substrate according to the first embodiment includes a metal layer. The metal layer defines a first region and a second region. The first region does not overlap the hole, and the second region overlaps the hole. The buffer layer is not disposed on the second region. The second region is not a region where the metal layer and the buffer layer are bonded. Therefore, even if the buffer layer is not disposed on the second region, the adhesion between the metal layer and the buffer layer is maintained.

Furthermore, the plating layer can be in direct contact with the metal layer. Accordingly, signals transmitted from the chip can be easily transmitted to the metal layer. Therefore, the electrical characteristics of the smart IC substrate can be improved.

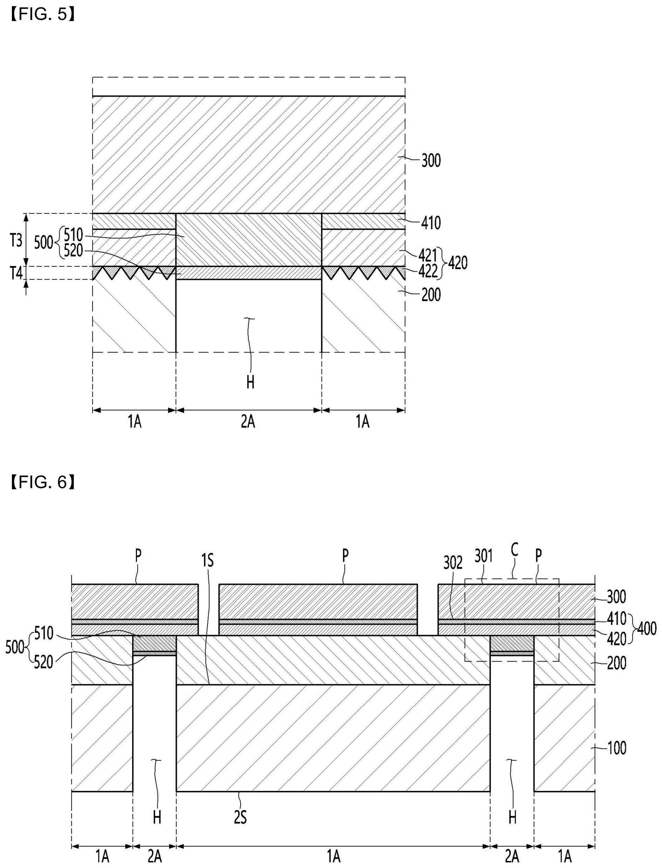

Hereinafter, a smart IC substrate according to a second embodiment will be described with reference to FIGS. 6 to 8. Descriptions identical or similar to those of the first embodiment will be omitted. The same reference numerals will be used for components identical to those of the first embodiment.

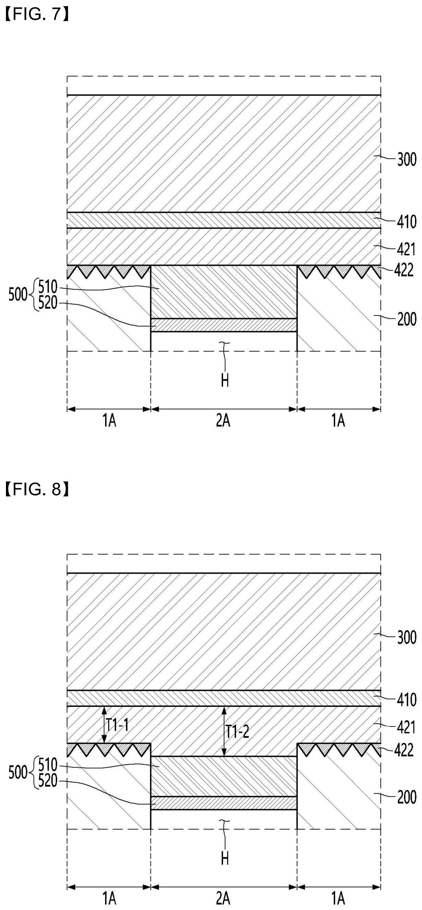

Referring to FIGS. 6 and 7, the buffer layer 400 may be partially removed.

In detail, the metal layer 300 may be divided into multiple regions. Specifically, the metal layer 300 may include a first region 1A and a second region 2A. The first region 1A is a region that does not overlap the hole H. The second region 2A is a region overlapping the hole H.

The buffer layer 400 is disposed on the first region 1A. Specifically, the first buffer layer 410 and the second buffer layer 420 are disposed on the first region 1A. In addition, the buffer layer 400 is partially disposed on the second region 2A. Specifically, the first buffer layer 410 is disposed on the second region 2A. In addition, the second buffer layer 420 is partially disposed on the second region 2A. In detail, the second-second buffer layer 422 on the second region 2A is removed. As a result, the first buffer layer 410 and the second-first buffer layer 421 are disposed on the second region 2A. Accordingly, the plating layer 500 can be in contact with the second-first buffer layer 421.

The second-second buffer layer 422 is an oxide metal layer. Accordingly, the second-second buffer layer 422 may have little or no electrical conductivity. Accordingly, the plating layer 500 and the metal layer 300 can be insulated by the second-second buffer layer 422. Accordingly, the second-second buffer layer 422 can be removed, and the metal layer 300 and the plating layer 500 can be electrically connected.

The buffer layer 400 is a layer for adhesion between the metal layer 300 and the bonding layer 200. The metal layer 300 does not adhere to the bonding layer 200 in a region overlapping the hole H. Accordingly, even if the second-second buffer layer 422 of the second region 2A is removed, the adhesion between the metal layer 300 and the bonding layer 200 can be maintained.

The plating layer 500 is disposed in a region overlapping the hole H. The plating layer 500 is disposed on the metal layer 300. Specifically, the plating layer 500 is disposed on the buffer layer 400. Specifically, the plating layer 500 is disposed on the second-first buffer layer 421.

The plating layer 500 is connected to a wire connected to the chip. That is, the chip and the plating layer are wire-bonded. As a result, the chip and the metal layer 300 are electrically connected to the chip.

The first buffer layer 410 and the second-first buffer layer 421 remain between the plating layer 500 and the metal layer 300.

Therefore, the strength of the wire-bonded region can be increased. The chip and the plating layer can be wire-bonded by heat and pressure. Therefore, the plating layer can be damaged during the wire-bonding process. The smart IC substrate according to the second embodiment can prevent the plating layer from being damaged. That is, the first buffer layer 410 and the second-first buffer layer 421 remain between the plating layer 500 and the metal layer 300.

Therefore, the strength of the wire-bonded region can be improved. Accordingly, damage to the plating layer can be prevented during the wire bonding process. Accordingly, the reliability of the smart IC substrate can be improved.

Meanwhile, referring to FIG. 8, the thickness of the second-first buffer layer 421 may be different for each region. Specifically, the thickness T1-1 of the second-first buffer layer of the first region 1A and the thickness T1-2 of the second-first buffer layer of the second region 2A may differ. Specifically, the thickness T1-2 of the second-first buffer layer of the second region 2A may be greater than the thickness T1-1 of the second-first buffer layer of the first region 1A. Specifically, the thickness T1-2 of the second-first buffer layer may be greater than the thickness T1-1 of the second-first buffer layer of the first region 1A by the thickness of the second-second buffer layer.

The second-second buffer layer 422 may be formed by selective oxidation. For example, after masking the second region 2A, the second buffer layer 420 may be oxidized. Accordingly, the second-second buffer layer 422 is formed only in the first region 1A, and not in the second region 2A.

Therefore, the thickness of the second-first buffer layer 421 differs for each region. Specifically, the second region 2A does not have the second-second buffer layer 422, which is an oxidized region. Consequently, the thickness of the second-first buffer layer 421 of the second region 2A may be greater than the thickness of the second-first buffer layer 421 of the first region 1A.

Therefore, the thickness of the wire-bonded region increases. This may enhance the strength of the wire-bonded region. Therefore, damage to the plating layer can be prevented during the wire bonding process. Accordingly, the reliability of the smart IC substrate can be improved.

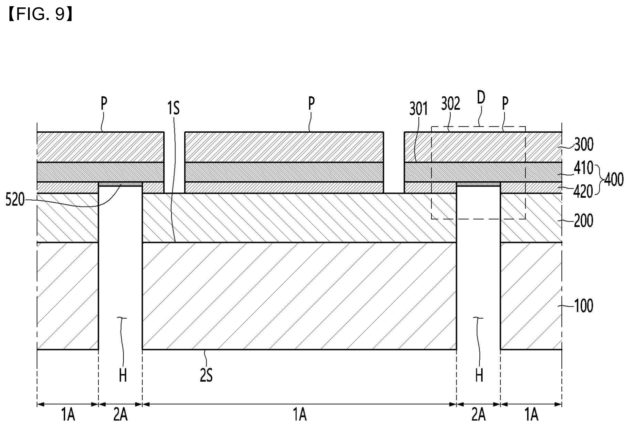

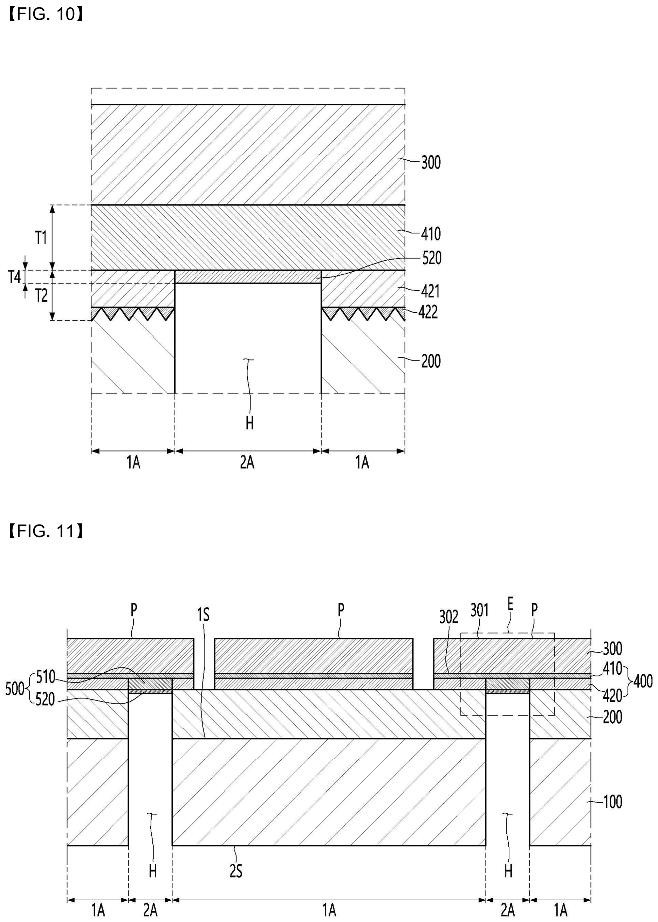

Hereinafter, a smart IC substrate according to a third embodiment will be described with reference to FIGS. 9 and 10 . Descriptions identical or similar to those of the first embodiment will be omitted. The same reference numerals are used for components identical to those of the first embodiment.

Referring to FIGS. 9 and 10 , the buffer layer 400 includes the first buffer layer 410 and the second buffer layer 420. The first buffer layer 410 and the second buffer layer 420 may have set thicknesses.

The thickness T1 of the first buffer layer may be greater than the thickness T2 of the second buffer layer. The thickness T1 of the first buffer layer may be greater than the thickness T4 of the second plating layer.

The thickness T1 of the first buffer layer may be 6 µm or greater. For example, the thickness T1 of the first buffer layer may be 6 µm to 11 µm, 7 µm to 10 µm, or 8 µm to 9 µm.

If the thickness T1 of the first buffer layer is less than 6 µm, the adhesive strength between the first buffer layer 410 and the second plating layer 520 may decrease. As a result, the adhesive strength between the metal layer 300 and the second plating layer 520 may decrease. Furthermore, when wire-bonding the second plating layer 520 and the chip, cracks may form in the first buffer layer 410.

Furthermore, if the thickness T1 of the first buffer layer exceeds 11 µm, the process efficiency of forming the buffer layer may decrease. Furthermore, the thickness of the smart IC substrate may increase.

The thickness T2 of the second buffer layer may be 3 µm to 8 µm, 3.5 µm to 7 µm, or 4 µm to 6 µm.

If the thickness T2 of the second buffer layer is less than 3 µm, the process of forming the second-second buffer layer 422 may be difficult. Consequently, the desired surface roughness may not be formed in the second buffer layer 420. Consequently, the adhesive strength between the metal layer 300 and the bonding layer 200 may be reduced. Furthermore, if the thickness T2 of the second buffer layer exceeds 8 µm, the process efficiency of forming the buffer layer may be reduced. Furthermore, the process time for removing the buffer layer in the second region 2A may increase.

The thickness of the first buffer layer may be greater than the thickness of the second buffer layer within the above range.

The buffer layer 400 may be partially removed.

In detail, the metal layer 300 may be divided into a plurality of regions. In detail, the metal layer 300 may include a first region 1A and a second region 2A. The first region 1A is a region that does not overlap the hole H. The second region 2A is a region that overlaps the hole H.

The buffer layer 400 is disposed on the first region 1A. In detail, the first buffer layer 410 and the second buffer layer 420 are disposed on the first region 1A. In addition, the buffer layer 400 is partially disposed on the second region 2A. In detail, the first buffer layer 410 is disposed on the second region 2A. In addition, the second buffer layer 420 is not disposed on the second region 2A. Specifically, the second buffer layer 420 on the second region 2A is removed. As a result, only the first buffer layer 410 is disposed on the second region 2A. Accordingly, one surface of the first buffer layer 410 may be exposed in the hole H. Accordingly, the plating layer is in contact with the first buffer layer 410.

The buffer layer 400 is a layer for adhesion between the metal layer 300 and the bonding layer 200. The metal layer 300 is not adhered to the bonding layer 200 in the region overlapping the hole H. Therefore, even if the second buffer layer 420 of the second region 2A is removed, the adhesion between the metal layer 300 and the bonding layer 200 can be maintained.

The plating layer is disposed on a region overlapping the hole H. The plating layer may include only the second plating layer 520. That is, the first plating layer 510 is omitted.

The second plating layer 520 is disposed on the metal layer 300. Specifically, the second plating layer 520 is disposed on the first buffer layer 410.

The first buffer layer 410 may include a material identical or similar to that of the first plating layer 510. Accordingly, the second plating layer 520 can be easily bonded to the first buffer layer 410.

The second plating layer 520 is connected to a wire connected to the chip. That is, the chip and the second plating layer 520 are wire-bonded. As a result, the chip and the metal layer 300 are electrically connected to the chip.

The first buffer layer 410 remains between the second plating layer 520 and the metal layer 300. The first buffer layer 410 includes a material identical or similar to that of the first plating layer 510. Accordingly, the second plating layer 520 is easily bonded to the first buffer layer 410. Furthermore, the first buffer layer 410 is formed to a thickness within a set range. For example, the thickness T1 of the first buffer layer may be greater than the thickness T2 of the second buffer layer. Accordingly, when wire bonding the second plating layer 520, damage to the second plating layer or the first buffer layer due to heat and pressure can be prevented.

Therefore, when wire bonding the chip and the plating layer, the process of forming the first plating layer can be omitted. Consequently, the process efficiency of the smart IC substrate can be improved.

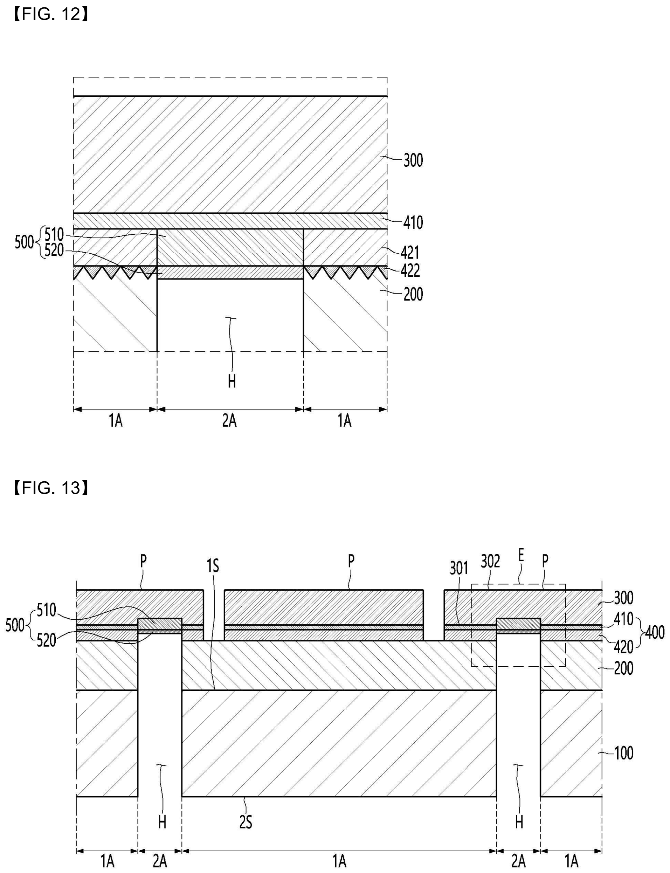

Hereinafter, a smart IC substrate according to the fourth embodiment will be described with reference to FIGS. 11 and 12. Descriptions of elements identical or similar to those of the first embodiment will be omitted. The same reference numerals will be used for elements identical to those of the first embodiment.

Referring to FIGS. 11 and 12, the buffer layer 400 may be partially removed.

In detail, the metal layer 300 may be divided into a plurality of regions. In detail, the metal layer 300 may include a first region 1A and a second region 2A. The first region 1A is a region that does not overlap the hole H. The second region 2A is a region that overlaps the hole H.

The buffer layer 400 is disposed on the first region 1A. In detail, the first buffer layer 410 and the second buffer layer 420 are disposed on the first region 1A. In addition, the buffer layer 400 is partially disposed on the second region 2A. In detail, the first buffer layer 410 is disposed on the second region 2A. In addition, the second buffer layer 420 is not disposed on the second region 2A. Specifically, the second buffer layer 420 on the second region 2A is removed. As a result, only the first buffer layer 410 is disposed on the second region 2A. Accordingly, one surface of the first buffer layer 410 may be exposed in the hole H.

The second-second buffer layer 422 is an oxide metal layer. Accordingly, the second-second buffer layer 422 may have little or no electrical conductivity. Accordingly, the plating layer 500 and the metal layer 300 may be insulated by the second-second buffer layer 422. Accordingly, the second buffer layer 420 including the second-second buffer layer 422 is removed.

The buffer layer 400 is a layer for adhesion between the metal layer 300 and the bonding layer 200. The metal layer 300 is not adhered to the bonding layer 200 in the region overlapping the hole H. Therefore, even if the second buffer layer 420 of the second region 2A is removed, the adhesion between the metal layer 300 and the bonding layer 200 can be maintained.

The plating layer 500 is disposed on the region overlapping the hole H. The plating layer 500 is disposed on the metal layer 300. Specifically, the plating layer 500 is disposed on the buffer layer 400. Specifically, the plating layer 500 is disposed on the first buffer layer 410. Accordingly, the first plating layer 510 is in contact with the first buffer layer 410.

The plating layer 500 is connected to a wire connected to the chip. That is, the chip and the plating layer are wire-bonded. Thus, the chip and the metal layer 300 are electrically connected to the chip.

The first buffer layer 410 remains between the plating layer 500 and the metal layer 300. The first buffer layer 410 and the first plating layer 510 may include a same material. For example, the first buffer layer 410 and the first plating layer 510 may include nickel.

Therefore, the thickness of the first plating layer 510 can be reduced. That is, since the first buffer layer 510 remains between the metal layer 300 and the first plating layer 510, the thickness of the first plating layer 510 can be reduced. Therefore, the process time for forming the first plating layer 510 can be shortened.

In addition, since the first buffer layer 410 and the first plating layer 510 comprise the same material, signals transmitted from the chip do not interfere at the interface between the first buffer layer 410 and the first plating layer 510. Therefore, the electrical characteristics of the smart IC substrate can be improved.

Hereinafter, a smart IC substrate according to a fifth embodiment will be described with reference to FIGS. 13 to 16. Descriptions identical or similar to those of the first embodiment will be omitted. Components identical to those of the first embodiment will be designated by the same reference numerals.

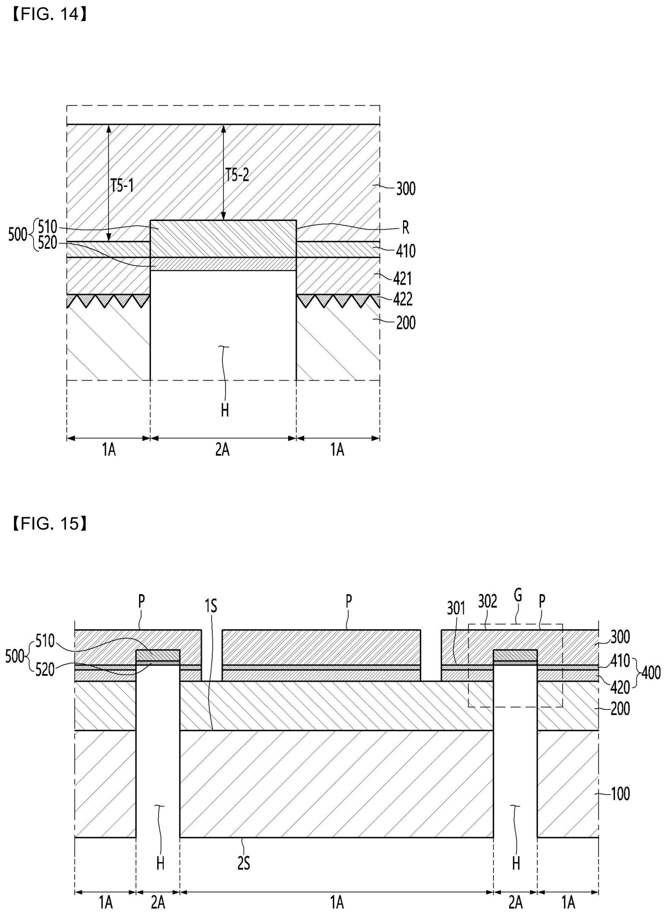

Referring to FIGS. 13 and 14, the metal layer 300 and the buffer layer 400 may be partially removed.

In detail, the metal layer 300 may be divided into a plurality of regions. Specifically, the metal layer 300 may include a first region 1A and a second region 2A. The first region 1A is a region that does not overlap with the hole H. The second region 2A is a region that overlaps with the hole H.

The buffer layer 400 is disposed on the first region 1A. In addition, the buffer layer 400 is not disposed on the second region 2A. The buffer layer on the second region 2A is removed. Therefore, the buffer layer 400 is not disposed inside the hole H.

The buffer layer 400 is a layer for ensuring adhesion between the metal layer 300 and the bonding layer 200. The metal layer 300 does not adhere to the bonding layer 200 in the region that overlaps the hole H. Therefore, even if the buffer layer 400 of the second region 2A is removed, the adhesion between the metal layer 300 and the bonding layer 200 can be maintained.

In addition, the metal layer 300 on the second region 2A may be partially removed. Accordingly, the thickness T5-1 of the metal layer on the first region 1A and the thickness T5-2 of the metal layer on the second region 2A may be different. In detail, the thickness T5-1 of the metal layer on the first region 1A may be greater than the thickness T5-2 of the metal layer on the second region 2A.

Since the metal layer on the second region 2A is partially removed, the metal layer 300 may include a recess portion R. The recess portion R is formed on the second region 2A. The recess portion R is formed in a region corresponding to the hole H. The recess portion R is connected to the hole H.

The plating layer 500 is disposed on a region overlapping the hole H. The plating layer 500 is disposed on the metal layer 300.

The plating layer 500 is formed on a portion of the hole H and the interior of the recess portion R. The plating layer 500 is disposed to fill the interior of the recess portion R. Accordingly, a portion of the side surface of the plating layer 500 is in contact with the metal layer 300.

The plating layer 500 is connected to a wire connected to the chip. That is, the chip and the plating layer are wire-bonded. Thus, the chip and the metal layer 300 are electrically connected to the chip.

The side surface of the plating layer 500 contacts the metal layer 300. Consequently, the contact area between the plating layer 500 and the metal layer 300 increases. Accordingly, a region through which signals transmitted from the chip move increases. Accordingly, the electrical characteristics of the smart IC substrate can be improved.

Furthermore, since the contact area between the plating layer 500 and the metal layer 300 increases, the bonding strength between the plating layer 500 and the metal layer 300 can be improved.

Furthermore, since the buffer layer 400 of the second region 2A is removed, a distance between the plating layer 500 and the metal layer 300 can be shortened. Consequently, signals transmitted from the chip can be easily transmitted to the metal layer 300.

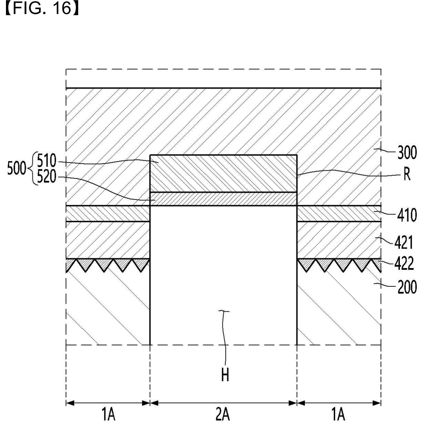

Meanwhile, referring to FIGS. 15 and 16, the plating layer 500 may be disposed only within the recess portion R. That is, the plating layer 500 may be embedded within the recess portion G.

Therefore, an entire outer surface of the plating layer 500 is in contact with the metal layer 300. Consequently, the contact area between the plating layer 500 and the metal layer 300 increases. Consequently, the electrical characteristics and bonding strength of the smart IC substrate may be improved.

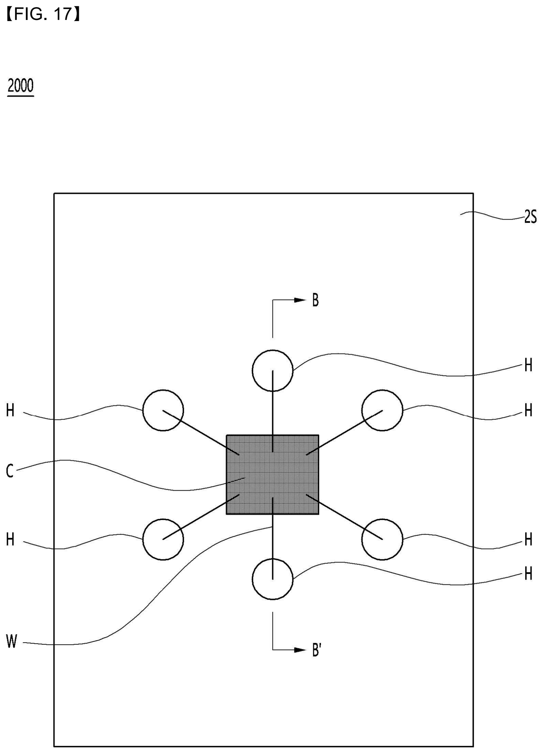

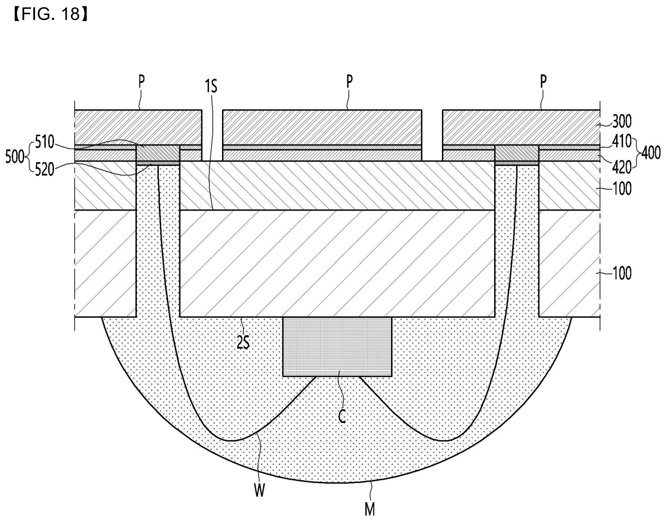

Hereinafter, a smart IC module will be described with reference to FIGS. 17 and 18.

Referring to FIGS. 17 and 18, the smart IC module 2000 includes a smart IC substrate 1000 according to the previously described embodiments and a chip C.

The chip C is disposed on the second surface 2S. Specifically, the chip C is disposed on the bonding surface.

The chip C is connected to the second plating layer 520. Specifically, the chip C and the second plating layer 520 are bonded by a wire W. Accordingly, the chip C and the conductive patterns P are electrically connected.

The wire W comprises a metal. Specifically, the wire W may comprise a different material from the second plating layer 520. For example, the wire W may comprise gold, copper, or aluminum.

A molding member M may be disposed on the chip C. The molding member M is disposed so as to cover the chip C and the wire W. Accordingly, damage to the wire bonding due to external impact can be prevented.

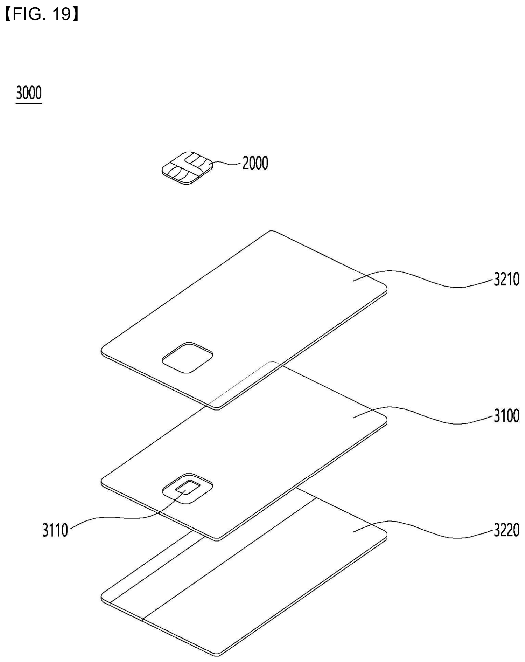

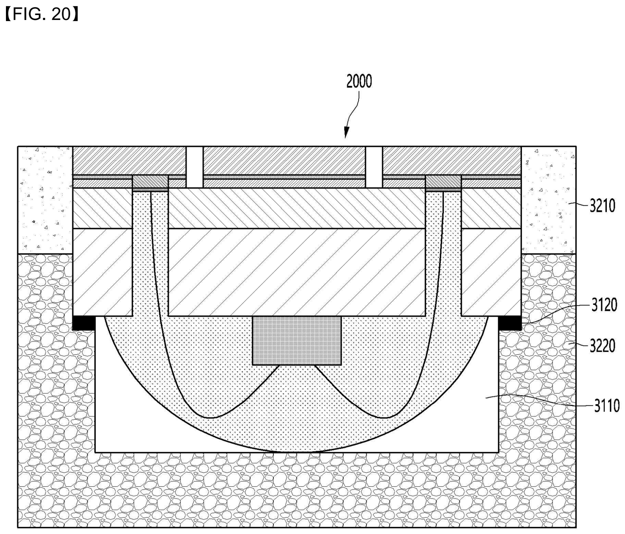

Hereinafter, a smart IC card according to an embodiment will be described with reference to FIGS. 19 and 20.

Referring to FIGS. 19 and 20, the smart IC card 3000 may include a main body 3100, a first protective layer 3210, and a second protective layer 3220.

The main body 3100 includes a receiving portion 3110. The smart IC module 2000 is disposed within the receiving portion 3110.

The IC card may be operated in various modes. For example, the IC card may be operated as a contact card.

Alternatively, an antenna pattern (not shown) may be disposed on the main body 3100. Specifically, the antenna pattern may be disposed in a coil shape at the edge of the main body 3100. Accordingly, the IC card may be operated as a contactless card, a combination card, or a hybrid card.

The smart IC module 2000 is inserted into the receiving portion 3110. The smart IC module 2000 and the main body 3100 are bonded by an adhesive layer 3120. As a result, the smart IC module 2000 is inserted into and fixed in the receiving portion 3110.

The first protective layer 3210 is disposed on the upper portion of the main body 3100. The first protective layer 3210 may include a transparent material. The first protective layer 3210 may include a transparent resin material. The first protective layer 3210 may be disposed in at least one layer. That is, the first protective layer 3210 may include a plurality of layers.

The second protective layer 3220 is disposed on the lower portion of the main body 3100. A magnetic stripe may be disposed on the second protective layer 3220. The second protective layer 3220 may include a transparent material. The second protective layer 3220 may include a transparent resin material. The second protective layer 3220 may be disposed in at least one layer. That is, the second protective layer 3220 may include a plurality of layers.

The characteristics, structures and effects described in the embodiments above are included in at least one embodiment but are not limited to one embodiment. In addition, the characteristics, structures, and effects and the like illustrated in each of the embodiments may be combined or modified even with respect to other embodiments by those of ordinary skill in the art to which the embodiments pertain. Thus, it should be construed that contents related to such a combination and such a modification are included in the scope of the embodiment.

The description has been focused on the embodiment, but it is merely illustrative and does not limit the embodiment. A person skilled in the art to which the embodiment pertains may appreciate that various modifications and applications not illustrated above are possible without departing from the essential features of the embodiment. For example, each component particularly represented in the embodiment may be modified and implemented. In addition, it should be construed that differences related to such changes and applications are included in the scope of the embodiment defined in the appended claims.

## Claims

1. A smart IC substrate comprising:
a substrate including a first surface and a second surface opposite the first surface;
a bonding layer disposed on the first surface;
a buffer layer disposed on the bonding layer;
a metal layer disposed on the buffer layer; and
a plating layer disposed on a lower surface of the metal layer,
wherein the metal layer includes an alloy including nickel (Ni), iron (Fe), and chromium (Cr),
wherein the buffer layer includes a first buffer layer a second buffer layer,
wherein the first buffer layer is disposed between the second buffer layer and the metal layer,
wherein the second buffer layer comprises a second-first buffer layer and a second-second buffer layer,
wherein the second-first buffer layer is disposed between the first buffer layer and the second-second buffer layer, and
wherein a surface roughness of the second-second buffer layer is greater than a surface roughness of the second-first buffer layer.

2. The smart IC substrate of claim 1, wherein the first buffer layer and the second-first buffer layer includes metal, and
wherein the second-second buffer layer includes a metal oxide.

3. The smart IC substrate of claim 1, wherein the plating layer includes a first plating layer disposed under the metal layer and a second plating layer disposed under the first plating layer, and
wherein the first buffer layer and the first plating layer includes a same metal.

4. The smart IC substrate of claim 3, wherein the first plating layer has a thickness greater than a thickness of the first buffer layer.

5. The smart IC substrate of claim 1, wherein a plurality of holes are formed penetrating the substrate and the bonding layer,
wherein the metal layer includes a first region that does not overlap the plurality of holes and a second region that overlaps the plurality of holes,
wherein the buffer layer is disposed on the first region,
wherein the buffer layer is not disposed on the second region, and
wherein the plating layer is in contact with the metal layer.

6. The smart IC substrate of claim 1, wherein a plurality of holes are formed penetrating the substrate and the bonding layer,
wherein the metal layer includes a first region that does not overlap the plurality of holes and a second region that overlaps the plurality of holes,
wherein the first buffer layer and the second buffer layer are disposed on the first region,
wherein the first buffer layer and the second-first buffer layer are disposed on the second region, and
wherein the plating layer is in contact with the second-first buffer layer.

7. The smart IC substrate of claim 6, wherein a thickness of the second-first buffer layer in the second region is greater than a thickness of the second-first buffer layer in the first region.

8. The smart IC substrate of claim 1, wherein the plating layer includes a second plating layer disposed under the metal layer,
wherein the second plating layer includes at least one of gold, silver, and palladium, and
wherein a thickness of the first buffer layer is greater than thicknesses of the second buffer layer and the second plating layer.

9. The smart IC substrate of claim 8, wherein a plurality of holes are formed penetrating the substrate and the bonding layer,
wherein the metal layer includes a first region that does not overlap the plurality of holes and a second region that overlaps the plurality of holes,
wherein the first buffer layer and the second buffer layer are disposed on the first region,
wherein the first buffer layer is disposed on the second region, and
wherein the second plating layer is in contact with the first buffer layer.

10. The smart IC substrate of claim 1, wherein a plurality of holes are formed penetrating the substrate and the bonding layer,
wherein the metal layer includes a first region that does not overlap the plurality of holes and a second region that overlaps the plurality of holes,
wherein the first buffer layer and the second buffer layer are disposed on the first region,
wherein the first buffer layer is disposed on the second region, and
wherein the plating layer includes a first plating layer in contact with the first buffer layer and a second plating layer disposed under the first plating layer.
